# EUROPÄISCHE PATENTSCHRIFT

(11) **EP 0 682 229 B1**
(45) Veröffentlichungstag und Bekanntmachung des Hinweises auf die Patenterteilung: **27.01.1999**
(21) Anmeldenummer: 95102555.0
(22) Anmeldetag: 23.02.1995
(51) Int. Cl.: G01D 5/26

(54) **Drehgeber**
Rotation sensor
Capteur de rotations

(30) Priorität: 13.05.1994 DE 9407988 U
(43) Veröffentlichungstag der Anmeldung: 15.11.1995
(73) Patentinhaber: MAX STEGMANN GmbH ANTRIEBSTECHNIK - ELEKTRONIK, D-78166 Donaueschingen (DE)
(72) Erfinder: Appel, Bernd, DE-78050 Villingen-Schwenningen (DE)
(74) Vertreter: Patentanwälte Westphal, Buchner, Mussgnug Neunert, Göhring

(56) Entgegenhaltungen:
- EP-A- 0 533 973
- FR-A- 2 109 742

## Beschreibung

Die Erfindung betrifft einen Drehgeber gemäß dem Oberbegriff des Anspruchs 1.

Drehgeber dienen dazu, die Winkelposition zwischen zwei gegeneinander verdrehbaren Objekten, z.B. einem Maschinengehäuse und einer Maschinenwelle zu bestimmen. Der Drehgeber weist ein Gehäuse auf, welches an der Maschine oder dergleichen befestigt wird. In dem Gehäuse ist drehbar eine Geberwelle gelagert, die mit der Meßwelle, deren Winkelstellung zu erfassen ist, d.h. z.B. der Maschinenwelle gekuppelt wird. Die Drehung der Geberwelle wirt durch Abtastung einer durch die Geberwelle angetriebenen, Winkelinformationen tragenden Scheiben bestimmt. Um axiale und radiale Abweichungen zwischen Meßwelle und Geberwelle aufzunehmen, ist entweder das Gehäuse des Drehgebers schwimmend befestigt oder die Geberwelle weist ein flexibles, radial und axial auslenkbares Element auf.

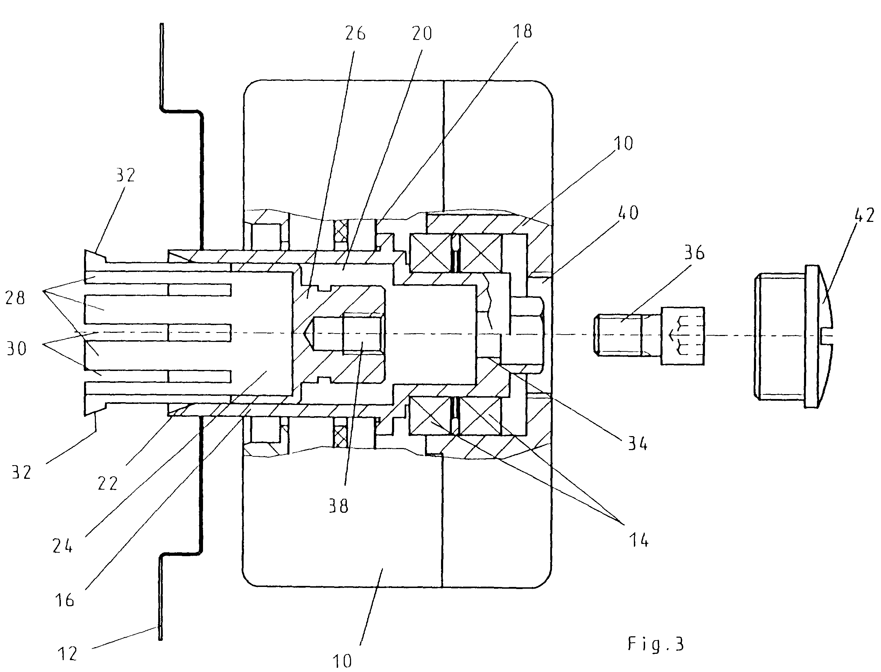

Aus der EP-A 0 533 973 ist ein Drehgeber mit den Merkmalen des Oberbegriffs des Anspruchs 1 bekannt. In dem Ausführungsbeispiel der Figuren 3A und 3B ist dabei die Geberwelle dieses Drehgebers als Hohlwelle ausgebildet, die an ihrem motorseitigen Ende ein Klemmstück mit einer koaxialen Innenbohrung aufweist. Die Meßwelle, deren Winkelstellung zu erfassen ist, greift koaxial in die Geberwelle ein. Eine Spannzangenhülse wird axial von hinten in die Geberwelle und über die Motorwelle geschoben. Das vordere Ende der Spannzangenhülse ist mit konischen federnden Spannbacken ausgebildet, die axial in die Innenbohrung des Klemmstückes eingedrückt werden und dadurch das Klemmstück und mit diesem die Geberwelle kraftschlüssig auf der Meßwelle festklemmen.

Der Erfindung liegt die Aufgabe zugrunde, einen Drehgeber zu schaffen, der in einfacher Weise unterschiedlichen Meßwellen-Durchmessern angepaßt werden kann.

Diese Aufgabe wird bei einem Drehgeber der eingangs genannten Gattung erfindungsgemäß gelöst durch die Merkmale des kennzeichnenden Teiles des Anspruchs 1.

Vorteilhafte Ausführungsformen der Erfindung sind in den abhängigen Ansprüchen angegeben.

Erfindungsgemäß ist in das meßwellenseitige Ende der Geberwelle eine Spannzange für die Meßwelle eingesetzt, die durch einen Innenkonus der Geberwelle geklemmt wird. Durch diese Klemmung wird die Spannzange einerseits kraftschlüssig auf der Meßwelle festgelegt und sitzt andererseits kraftschlüssig fest in der Geberwelle.

Die Kupplung der Geberwelle mit der Meßwelle mittels der Spannzange hat den Vorteil, daß die Spannzange sich in einem gewissen Bereich dem Durchmesser der Meßwelle anpaßt. Der Drehgeber mit der Spannzangenkupplung kann somit für eine größere Zahl von Anwendungsfällen mit unterschiedlichen Meßwellen-Durchmessern verwendet werden. Bei größeren Unterschieden im Durchmesser der Meßwelle kann die Spannzange ausgetauscht werden gegen eine Spannzange passenden Innendurchmessers, ohne daß sonstige Änderungen an dem Drehgeber notwendig sind. Es ist daher möglich, mit einem einzigen Drehgeber-Typ einen sehr großen Bereich von Anwendungsfällen mit unterschiedlichen Meßwellen-Durchmessern abzudecken. Es ist hierzu nur erforderlich, die Spannzange mit unterschiedlichen Innendurchmessern bereitzustellen. Da außerdem die Spannzange mit einem bestimmten Innendurchmesser sich auch für einen gewissen Bereich von Meßwellen-Durchmessern eignet, ist auch die Zahl der notwendigen unterschiedlichen Spannzangengrößen gering.

Um die Spannzange zur Klemmung in die Geberwelle zu ziehen, ist eine Schraube vorgesehen, die koaxial in die Geberwelle eingesetzt ist, sich an der Geberwelle abstützt und in ein Innengewinde im geberseitigen Ende der Spannzange eingreift. Die Schraube dient einerseits als Zugmittel für die Klemmung der Spannzange und andererseits zur Befestigung der Spannzange in der Geberwelle. Das Auswechseln der Spannzange ist äußerst einfach, da nur diese Schraube gelöst werden muß. Das Klemmen der Spannzange kann ebenfalls in einfacher Weise mittels dieser Schraube bewirkt werden, wobei die Klemmung bei montiertem Drehgeber von der der Anbauseite abgewandten Seite her bewirkt werden kann. Außerdem führt eine Verdrehsicherung die Spannzange unverdrehbar in der Geberwelle.

Im folgenden wird die Erfindung anhand eines in der Zeichnung dargestellten Ausführungsbeispiels näher erläutert. Es zeigen:

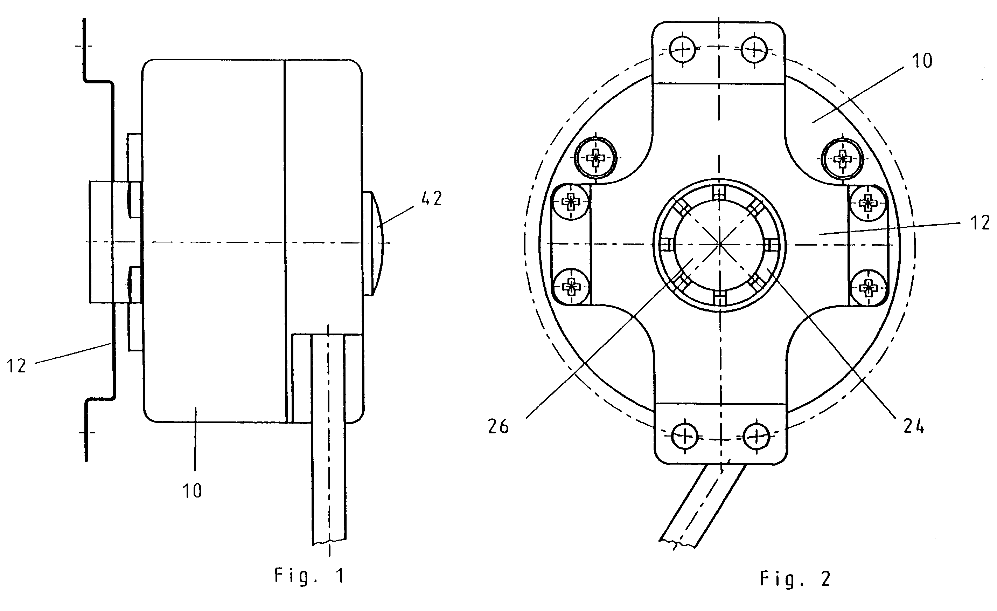

- Figur 1: eine Seitenansicht des Drehgebers,
- Figur 2: eine Stirnansicht des Drehgebers von der Anbauseite und
- Figur 3: einen axialen Schnitt des Drehgebers.

Der Drehgeber weist ein Gehäuse 10 auf, welches mittels eines Federkreuzes 12 axial beweglich und kippbar, aber drehfest schwimmend an der Anbaufläche einer Maschine oder eines Motors montiert wird.

In dem Gehäuse 10 ist mittels Kugellagern 14 axial und radial abgestützt eine Geberwelle 16 drehbar gelagert. Die Geberwelle 16 trägt eine Scheibe 18, die inkrementale oder absolute Winkelinformationen trägt, welche über eine nicht dargestellte Abtastung abgetastet und ausgewertet werden.

Die Geberwelle 16 ist als Hohlwelle mit einer gegen die Anbauseite hin offenen koaxialen Innenbohrung 20 ausgebildet. An dem offenen Ende der Innenbohrung 20 ist ein sich gegen die Anbauseite hin öffnender Innenkonus 22 angeordnet.

In die Innenbohrung 20 der Geberwelle 16 ist axial eine Spannzange 24 einschiebbar, die an ihrem Außenumfang in der Innenbohrung 20 geführt ist. Die Spannzange 24 ist ein einstückiges hohlzylindrisches Teil mit einem topfförmigen geschlossenen inneren Boden 26. An die bodenseitige geschlossene Zylinderwand der Spannzange 24 sind gegen die Anbauseite gerichtete federnde Spannbacken 28 einstückig angeformt, die durch axiale Schlitze 30 voneinander getrennt sind. An den freien Enden der Spannbacken 28 ist außen ein Außenkonus 32 angeformt, der sich gegen die Anbauseite hin erweitert und im Kegelwinkel dem Innenkonus 22 der Geberwelle 16 entspricht.

Die von der Anbauseite abgewandte geschlossene Stirnfläche der Geberwelle 16 ist von einer koaxialen Bohrung 34 durchbrochen, in welche frei bewegbar eine Schraube 36 eingesetzt ist. Die Schraube 36 stützt sich mit ihrem Kopf axial an der Stirnfläche der Geberwelle 16 ab und greift mit ihrem in die Geberwelle 16 hineinragenden Gewindeschaft in eine Gewindebohrung 38, welche koaxial in einem verstärkten Ansatz des Bodens 26 der Spannzange 24 ausgebildet ist. Zur Betätigung der Schraube 36 ist der mit einem Innensechskant versehene Kopf der Schraube 36 über einen Durchbruch 40 des Gehäuses 10 zugänglich. Eine Aufsteckkappe 42 dient zum Verschließen des Durchbruches 40.

Zur Montage des Drehgebers wird eine Spannzange 24 mit dem dem Meßwellen-Durchmesser angepaßten Innendurchmesser in die Geberwelle 16 eingeschoben und durch Eindrehen der Schraube 36 in die Gewindebohrung 38 gesichert. Der Drehgeber kann nun an der Maschine, dem Motor oder dergleichen montiert werden. Hierzu wird der Drehgeber mit der Spannzange 24 axial auf die Meßwelle aufgesteckt. Damit ist die Spannzange 24 reibschlüssig in der Geberwelle 16 festgehalten und die Schraube 36 kann angezogen werden, um die Spannzange 24 zusätzlich mit verstärkter Zugkraft in die Geberwelle 16 zu ziehen und den über den Innenkonus 22 und den Außenkonus 32 bewirkten Anpreßdruck der Spannbacken 28 gegen die Meßwelle zu vergrößern. Die Schraube 36 und die Gewindebohrung 38 weisen ein Feingewinde auf, das einerseits einen hohen Schließdruck der Spannzange 24 gewährleistet und andererseits selbsthemmend ist, um ein erschütterungsbedingtes Lösen der Schraube 36 zu verhindern.

Um die Spannzange 24 für das Eindrehen der Schraube 36 drehfest in der Geberwelle 16 zu halten, genügt im allgemeinen der Reibschluß zwischen dem Innenkonus 22 und dem Außenkonus 32, der beim axialen Eindrücken der Spannzange 24 durch die Meßwelle erzeugt wird. Zusätzlich wird zur Verdrehsicherung in die Geberwelle 16 ein Stift eingesetzt, der radial in einen der axialen Schlitze 30 der Spannzange 24 eingreift.

## Patentansprüche

1. Drehgeber mit einem Gehäuse (10), mit einer in dem Gehäuse (10) drehbar gelagerten Geberwelle (16), mit einer durch die Geberwelle (16) angetriebenen, Winkelinformationen tragenden Scheibe (18) und mit einer Abtastung für die Winkelinformationen, wobei zur drehfest kuppelnden Verbindung der Geberwelle (16) mit einer Meßwelle, deren Winkelstellung zu erfassen ist, die Geberwelle (16) an ihrem meßwellenseitigen Ende eine koaxiale Innenbohrung (20) aufweist, in welche eine Spannzange (24) eingesetzt und axial verschiebbar ist, und wobei die Spannzange (24) einen Außenkonus (32) aufweist, der mit einem Innenkonus (22) der Innenbohrung (20) der Geberwelle (16) zusammenwirkt und die Spannzange (24) zum Spannen der Meßwelle klemmt, dadurch gekennzeichnet, daß die Spannzange (24) durch eine Schraube (36) in die Innenbohrung (20) einziehbar ist, um die Spannzange zum Spannen der Meßwelle zu klemmen, daß die Schraube (36) die Geberwelle (16) koaxial durchsetzt, sich axial an der Geberwelle (16) abstützt und in eine koaxiale Gewindebohrung (38) des von der Meßwelle abgewandten Endes der Spannzange (24) eingreift und daß eine Verdrehsicherung die Spannzange (24) unverdrehbar in der Geberwelle (16) führt.

2. Drehgeber nach Anspruch 1, dadurch gekennzeichnet, daß die Gewindebohrung (38) in einem Boden (26) der Spannzange (24) ausgebildet ist.

3. Drehgeber nach Anspruch 1, dadurch gekennzeichnet, daß die Verdrehsicherung ein radial in der Geberwelle (16) sitzender Stift ist, der in einen der die Spannbacken (28) trennenden axialen Schlitze (30) eingreift.

## Claims

1. Rotary transducer comprising a housing (10) comprising a transducer shaft (16) rotatably mounted in the housing (10), comprising a disc (18) driven by the transducer shaft (16) and carrying angular information (18) and comprising a scanning system for the angular information, the transducer shaft (16) having, at its measuring-shaft end a coaxial internal bore (20) for the rotation-locked connection of the transducer shaft (16) to a measuring shaft whose angular position is to be determined, into which bore a collet chuck (24) is inserted and is axially displaceable, and the collet chuck (24) having an external cone (32) which interacts with an internal cone (22) of the internal bore (20) of the transducer shaft (16) and clamps the collet chuck (24) for the purpose of gripping the measuring shaft, characterized in that the collet chuck (24) can be drawn into the internal bore (20) by a screw (36) for the purpose of clamping the collet chuck so as to grip the measuring shaft, in that the screw (36) coaxially penetrates the transducer shaft (16), thrusts itself axially against the transducer shaft (16) and engages in a coaxial threaded bore (38) of that end of the collet chuck (24) which is remote from the measuring shaft, and in that an anti-rotation element guides the collet chuck (24) non-rotatably in the transducer shaft (16).

2. Rotary transducer according to Claim 1, characterized in that the threaded bore (38) is formed in a base (26) of the collet chuck (24).

3. Rotary transducer according to Claim 1, characterized in that the anti-rotation element is a pin which sits radially in the transducer shaft (16) and which engages in one of the axial slots (30) which separate the clamping jaws (28).

## Revendications

1. Capteur de rotation comprenant un boîtier (10), un arbre de capteur (16) monté de façon à pouvoir tourner dans le boîtier (10), un disque (18) entraîné par l'arbre de capteur (16) et portant des informations angulaires, et un système de captage des informations angulaires, capteur dans lequel, pour avoir une liaison d'accouplement solidaire en rotation entre l'arbre de capteur (16) et un arbre de mesure dont on doit déterminer la position angulaire, l'arbre de capteur (16) présente, à son extrémité située du côté de l'arbre de mesure, un alésage interne coaxial (20) dans lequel on insère une pince de serrage (24) qu'on peut faire coulisser axialement, la pince de serrage (24) présentant un cône extérieur (32) qui coopère avec un cône intérieur (22) de l'alésage interne (20) de l'arbre de capteur (16) et cette pince de serrage (24) servant à serrer l'arbre de mesure,
caractérisé en ce qu'
- on peut enfoncer la pince de serrage (24), au moyen d'une vis (36), dans l'alésage intérieur (20), pour amener la pince de serrage à serrer l'arbre de mesure,
- la vis (36) passe à travers l'arbre de capteur (16) de façon coaxiale, prend appui axialement sur l'arbre de capteur (16), et vient en prise dans un alésage fileté coaxial (38) de l'extrémité de la pince de serrage (24) qui est située à l'opposé de l'arbre de mesure, et
- un organe de blocage en rotation guide la pince de serrage (24) sans pouvoir tourner dans l'arbre de capteur (16).

2. Capteur selon la revendication 1,
caractérisé en ce que
l'alésage fileté (38) est constitué dans le fond (26) de la pince de serrage (24).

3. Capteur selon la revendication 1,
caractérisé en ce que
l'organe de blocage en rotation est une tige qui se trouve radialement dans l'arbre de capteur (16), tige qui vient en prise dans l'une des fentes axiales (30) séparant les mâchoires de serrage (28).
